# EUROPEAN PATENT SPECIFICATION

(11) **EP 3 062 489 B1**
(45) Date of publication and mention of the grant of the patent: **03.07.2019**
(21) Application number: 15156512.4
(22) Date of filing: 25.02.2015
(51) Int. Cl.: H04L 29/12

(54) **DHCP USING A DISTRIBUTED DATA STRUCTURE**
DHCP MIT VERTEILTER DATENSTRUKTUR
DHCP UTILISANT UNE STRUCTURE DE DONNÉES DISTRIBUÉE

(43) Date of publication of application: 31.08.2016
(73) Proprietor: Deutsche Telekom AG, 53113 Bonn (DE)
(72) Inventor: Agapi, Andrei, 1064CN Amsterdam (NL); Schatzmayr, Rainer, 53229 Bonn (DE); Lothberg, Peter, Los Altos, California 94022 (US)
(74) Representative: Schwöbel, Thilo K.

(56) References cited:
- US-A1- 2011 238 793
- DROMS BUCKNELL UNIVERSITY R COLE AT&T MNS R: "An Inter-server Protocol for DHCP; draft-ietf-dhc-interserver-01.txt", 19970301, vol. dhc, no. 1, 1 March 1997 (1997-03-01) , XP015017067, ISSN: 0000-0004
- Mirko Romano Palmer: "Bachelor Thesis Distributed DHCP and DNS in a Wireless Mesh Network Based on DHTs", , 30 December 2011 (2011-12-30), XP055199022, Retrieved from the Internet: URL:http://www.net.t-labs.tu-berlin.de/pap ers/R-DDDWMNBD-12.pdf [retrieved on 2015-06-30]
- NAIMING SHEN KISHORE SESHADRI SAID OUISSAL REDBACK NETWORKS TOM S C SOON SBC COMMUNICATIONS DAE-CHEOL ROH KOREA TELECOM: "DHCP Proxy Server Micro-block Allocation Scheme For IP Address Pool Management; draft-shen-dhc-block-alloc-02.txt", 20040201, no. 2, 1 February 2004 (2004-02-01), XP015035218, ISSN: 0000-0004
- NING WU AND ALVA COUCH-COMPUTER SCIENCE DEPARTMENT ET AL: "Experience Implementing an IP Address Closure", USENIX,, 30 November 2006 (2006-11-30), pages 1-12, XP061009099, [retrieved on 2006-11-30]

## Description

### BACKGROUND

The present invention relates to a method for enhancing the availability, scalability and/or performance of a DHCP functionality (Dynamic Host Configuration Protocol functionality) provided by a DHCP entity within a telecommunications network by using a distributed data structure.

Furthermore, the present invention relates to a DHCP entity for enhancing the availability, scalability and/or performance of a DHCP functionality provided by a DHCP entity within a telecommunications network by using a distributed data structure, wherein the DHCP entity comprises at least one DHCP server entity, but typically a plurality of DHCP server entities.

Additionally, the present invention relates to a telecommunications network for enhancing the availability, scalability and/or performance of a DHCP functionality provided by a DHCP entity within a telecommunications network by using a distributed data structure.

Furthermore, the present invention relates to a distributed data structure that is configured to be used by an inventive method or with an inventive DHCP entity or with an inventive telecommunications network.

The DHCP (Dynamic Host Configuration Protocol) protocol has been designed many years ago. The DHCP is a network protocol used to assign IP addresses and provide configuration information to devices such as servers, desktops, or mobile devices, so they can communicate on a network using the Internet Protocol. It is a client server protocol that assures that, for typically a number of client network nodes (i.e. a plurality of network nodes) within a telecommunications network, a network address - typically an IP address - is assigned to each of the plurality of (client) network nodes, respectively. In a situation of a network operator providing network connectivity services, the client network node is typically located at the customers' premises, e.g. in a device located at the customers' premises, and a server providing the DHCP functionality is typically located at the operator network. According to the DHCP protocol, the DHCP client (i.e. the client network node) asks the DHCP server for an IP address. The DHCP server manages a pool of IP addresses, and allocates one address of this pool to the DHCP client. The allocation is sent to the client network node via a DHCP IP address offer message.

Current implementations of the DHCP server have problems in being migrated to a cloud computing environment, i.e. a distributed computing environment. The limitation in the current DHCP server implementations is that due to the fact that the DHCP protocol is a stateful protocol, it requires a persistent storage for IP addresses pools and leases. The DHCP server needs to store the information about which address (or IP address) has been allocated to each customer (i.e. to which (client) network node), for how long such addresses leases are valid, and which IP address are still available in the pool for future (lease) requests of (client) network nodes.

To depend on a single server creates a single point of failure for the telecommunications network, and hence its operator. Increasing the availability of the server, by building a higher hardware availability, does not prevent from software failures or site failures such as cable cuts. Installing a second server at a different site increases the availability of having an operational DHCP server, as double failures are less probable than a single failure. However, having two DHCP servers requires co-ordination between these DHCP servers for providing DHCP functionality, such as DHCP responses, to the (client) network nodes, i.e. the typically the customer of the telecommunications network. One alternative solution currently known to address this problem is to split the IP address pools between both DHCP servers used. However, the partitioning of IP address pools results in less efficient usage of the IP addresses, as each one of such two DHCP servers (managing half of the IP addresses of the total pool of IP addresses) must be able to serve the whole telecommunications network. Another alternative solution is to have a protocol between the two DHCP servers such that one of the DHCP servers can inform the other DHCP server about the IP managed IP address pool and current leases. However, such a solution of using two DHCP servers does not scale well for more than two DHCP servers as address pools become very partitioned, or the synchronization of the servers becomes complex.

### SUMMARY

An object of the present invention is to provide a technically simple and efficient solution for enhancing the availability, scalability and/or performance of a DHCP functionality, wherein the usage of the IP address pool can be enhanced, the availability and performance of the DHCP functionality increased, and the hardware equipment requirements reduced.

The object of the present invention is achieved by a method according to claim 1.

According to one aspect of the present invention, a DHCP functionality is implemented by running multiple, cooperating DHCP server entities sharing the state of a database held in a distributed data structure, especially a distributed hash table. The shared state of the database includes information related to IP leases given to all clients (i.e. to any client of the respective telecommunications network served by the DHCP functionality), as well as IP addresses used from the address pools shared by all DHCP server entities.

According to the present invention, by using a distributed data structure that the DHCP entity (providing the DHCP functionality) is able to access using at least one DHCP server entity, it is advantageously possible that the DHCP server entities (of the DHCP entity providing the DHCP functionality) become much simpler compared to other solutions where DHCP servers have to handle synchronization with other DHCP servers (that provide, together, the DHCP functionality for a telecommunications network). As simpler DHCP server entities are more stable, the solution according to the present invention corresponds to a more stable operation of the DHCP functionality. Additionally, it is advantageously possible according to the present invention that the amount of (or the number of) DHCP server entities (within the DHCP entity providing the DHCP functionality) can be scaled up or down, i.e. DHCP server entities can be added and removed, without DHCP server entities having to interact with each other.

Furthermore according to the present invention, by using a distributed data structure that the DHCP entity is able to access using at least one DHCP server entity, it is advantageously possible that IP address pools do not have to be partitioned between the DHCP server entities. The whole pool of IP addresses can be made available to all participating DHCP server entities (providing, together, the DHCP functionality). This enables that, in case that any DHCP server entity crashes, other DHCP server entities are able to subsequently renew leases that the first DHCP server entity granted. This is not possible if the IP pools are partitioned (the usual current deployment mode of DHCP), which forces DHCP clients (or network nodes) to change their IP addresses upon crashes of the respective DHCP server entity, thus needing to tear down any existing TCP connections that these network nodes are handling.

A further advantage of using a distributed data structure according to the present invention to store the data in order to provide a DHCP functionality, especially using a distributed hash table, is that the physical distribution of the DHCP server entities can be achieved by using the physical distribution capabilities of the distributed data structure database, especially a distributed hash table. Additionally, it is advantageously possible to use scalable and well-established database synchronization algorithms to ensure a synchronization of DHCP server entities operating on shared data (especially within a distributed hash table), rather than specifying synchronization algorithms specifically to be used for providing DHCP functionality by DHCP servers. It is furthermore advantageously possible - by using a distributed data structure, especially a distributed hash table, for providing DHCP functionality - to use database-backed synchronization methods, and hence to reliably cover all failure cases for DHCP servers, including, for example,
-- DHCP servers crashing in the middle of handling a lease request, i.e. between the DISCOVER and REQUEST packets for the same lease,
-- multiple DHCP servers attempting to respond to the same request, all DHCP servers crashing at the same time, etc.

By using a distributed data structure, especially a distributed hash table, as a database for providing a DHCP functionality, the (degree of achievable) availability of a server providing the DHCP functionality can be improved (compared to the solutions according to the state of the art). In this respect, the challenge is to have a common database for multiple servers in a distributed form. A distributed hash table is a distributed database that is based on a (key, value) storage model. Each value has a name, and each name can be hashed to a key of a certain length. A key is generated from the name of an entity whenever a value of the entity has to be stored in the distributed hash table. Information retrieval is achieved by calculating the hash value of a name, and retrieving the stored value.

The most scalable solution is to have a common database, containing all the DHCP pools and leases, that is accessed by all DHCP server entities. As all DHCP server entities access the same database, there is no need to use additional protocols that would be necessary in case that the DHCP functionality would be realized by a plurality of DHCP servers and hence the necessity to synchronize each DHCP server with the other DHCP servers.

According to the present invention, distributed data structures are typically used to store data in a distributed manner on a number of network nodes or database nodes that are typically connected by data transmission lines. In particular, the distributed data structure is realized by a distributed database system comprising the database nodes, thereby realizing, e.g., a distributed hash table (DHT), comprising key-value pairs. Each key-value pair of the key-value pairs comprises a key and a value associated with the key. The key is used by the distributed hash table to store and/or to retrieve the value associated with the key. In particular, a hash function is used to calculate the key based on a name of the object being stored.

A distributed hash table is a distributed database (i.e. a distributed data structure), which means that it is logically a single database, but physically a database deployed at multiple instances. The algorithms of the distributed hash table distribute the keys and its associated values across all nodes participating in the distributed hash table. Redundancy mechanisms as storing the same key and value on multiple nodes ensure that that a loss of one of the distributed hash table nodes does not results in a loss of data. The distributed hash table algorithm also handles situations as nodes joining the distributed hash table, and nodes leaving the distributed hash table.

Furthermore, some distributed hash tables extend the basic (Key, Value) storage model, by providing tabular storage (organizing data in tables, columns, keyspaces etc.), build and maintain indexes over non-key columns, provide SQL-like query languages, etc. Apache Cassandra (http://cassandra.apache.org), an example of such a distributed hash table, is an open source distributed database management system designed to handle large amounts of data across many commodity servers, providing high availability with no single point of failure.

According to the present invention, a distributed data structure, especially a distributed hash table and, e.g., the Apache Cassandra database, is used as a database to share state information between DHCP server entities. This enables server entities to cooperate in handling DHCP clients, for instance allowing a DHCP server entity to take over handling of a request from a crashed peer (DHCP server entity), even in the middle of a lease request being handled.

According to the present invention, it is preferred that the information shared by DHCP server entities is stored in the distributed hash table database, organized in two database tables: a utilized IP addresses table (hereinafter also called "IP pool table part" of the distributed data structure) and a leases table (hereinafter also called "leases table part" of the distributed data structure).

The utilized IP addresses table (or IP pool table part) contains all IP addresses that have been given by the cooperating set of DHPC server entities, to all their (client) network nodes. The utilized IP addresses table (IP pool table part) is especially keyed by the IP address of the lease given, and also holds, in a different field, the MAC address and/or the DUID (DHCP Unique Identifier) (i.e. the hardware address) of the client that the IP address was given to. This table is only populated at the time leases are given, i.e. the database is not pre-populated with all possible addresses that the set of servers are allowed to give. The DUID (DHCP Unique Identifier) is used by a client to get an IP address from a DHCPv6 server. The DUID has a minimum length of 12 bytes (96 bits) and a maximum length of 20 bytes (160 bits). Its actual length depends on its type. The server compares the DUID with its database and delivers configuration data (address, lease times, DNS servers, etc.) to the client. The information regarding the available IP address pools (i.e. the possible addresses that the DHCP servers entities (of the DHCP functionality) are allowed to give to the network nodes) is given separately, as a configuration information to the DHCP server entities, somehow in analogy to known non-DB backed implementations. Otherwise said, an entry will preferably only exist in the utilized IP database if that IP address is currently allocated to a lease, and the database is totally empty if no leases are currently given. According to the present invention, this choice is made to help database storage efficiency.

The leases table (or leases table part of the distributed data structure) describes the complete state of the leases that have been given by the cooperating set of DHPC server entities, to all their (client) network nodes. This leases table part is preferably keyed by the MAC and/or the DUID (i.e. the hardware address) of the (client) network nodes that the lease has been granted to, and contains preferably all other information describing the lease, including, e.g., the lease IP address, the granting time, the expiration time, the binding state (i.e. whether active, expired, abandoned, released etc), as well as other implementation-specific information required for correct recovery (e.g. next lease state upon timer expiry, billing class, information derived from server configuration etc.).

According to the present invention, each row in the leases table (or the leases table part) preferably also contains a lock structure. A lease row (i.e. a data item of the leases table part) will be present in the leases table for a given (client) network node if a lease for that (client) network node was previously granted by any of the DHCP server entities in the cooperating set (of DHCP server entities). It is especially preferred according to the present invention that upon expiry or other state change of the lease (e.g. lease abandonment because some DHCP server entity notices an IP collision, e.g. via reverse ping-ing), the lease row (of the leases table part) will still be kept in the database, but it will be inactive, with an updated corresponding state (free, released, abandoned etc).

According to the present invention, the method comprises the following steps:
-- in a first step, the at least one DHCP server entity is triggered by a trigger event to access the distributed data structure,
-- in a second step, subsequent to the first step, the at least one DHCP server entity accesses the distributed data structure in such a manner that a specific data item of the leases table part - that is assigned to the lease of an IP address leased to the at least one network node - is locked by the at least one DHCP server entity,
-- in a third step, subsequent to the second step, and after the specific data item of the leases table part has been generated and/or updated and/or otherwise modified, the lock of the specific data item is released by the at least one DHCP server entity.

By assuring that a specific data item of the leases table part (assigned to the lease of an IP address leased to the at least one network node) is locked by the DHCP server entity that is operating on it, it is advantageously possible to increase the consistency of the DHCP database - especially in caste that the one DHCP server entity (of the plurality of DHCP server entities) crashes during accessing a data item of the leases table part.

According to the present invention, the trigger event triggering the at least one DHCP server entity to access the distributed data structure corresponds to at least one out of the following:
-- a lease expiration event, especially due to the expiry of a lease timer,
-- the reception, at the at least one DHCP server entity, of a request message from the at least one network node, the request message especially referring to a lease acquisition request and/or a lease renewal request, especially by means of a DHCPREQUEST message and/or a DHCPDISCOVER message,
-- the reception, at the at least one DHCP server entity, of a lease release message from the at least one network node,
-- a lease abandonment event.

Thereby, it is advantageously possible, according to the present invention, to use the inventive locking mechanism (of a data item of the leases table part) anytime one of these data items is accessed by any of the DHCP server entities providing the DHCP functionality.

According to the present invention, it is preferred that the realization of a DHCP functionality based on using a distributed data structure (especially in the form of a distributed hash table) does not modify the frontend (towards the (client) network nodes) of the DHCP functionality (i.e. the frontend of the DHCP server entities) in any way: no protocol modifications are required and all existing DHCP clients are supported, e.g. DHCP server entities are still reached by (client) network nodes over UDP sockets (broadcast and unicast), and all database-related synchronization between the DHCP server entities happens in the backend.

According to a preferred embodiment of the present invention, the distributed data structure comprises, besides the leases table part, an IP pool table part, wherein the IP pool table part comprises a further set of data items, the data items of the IP pool table part comprising all IP addresses that have been given as leases towards the network nodes of the telecommunications network, wherein the IP pool table part is keyed by the IP addresses of the leases of IP addresses given to the network nodes.

Thereby, it is advantageously possible to provide the DHCP functionality using the leases table part, keyed by the MAC addresses and/or the DUID of the network nodes, and the IP pool table part of the distributed data structure.

Furthermore, it is preferred according to the present invention that the data items of the leases table part comprise, respectively, all pieces of information describing the lease, including at least:
-- the lease IP address,
-- the granting time of the lease,
-- the expiration time of the lease,
-- the binding state of the lease,
wherein the data items of the leases table part especially comprise, respectively, additional implementation-specific pieces of information of the lease, comprising at least one out of the following:
-- the next lease state upon time expiry,
-- the billing class of the lease,
-- information derived from server configuration.

As an example of a trigger event causing at least one DHCP server entity to access (at least one data item of) the distributed data structure (especially the leases table part thereof), in the following a basic DHCP lease request (or lease acquisition) flow is described:
At an initial stage, the (client) network node issues a DHCPDISCOVER packet over an IP broadcast address, which reaches all (DHT-based) DHCP server entities configured to listen on that broadcast address. All these DHCP server entities share and work on the same lease database (i.e. the leases table part) and IP addresses database (i.e. the IP pool table part). Subsequently, the (DHT-based) DHCP server entities synchronize over the distributed data structure (DHT database), such that only one DHCP server entity (of the plurality of DHCP server entities) handles the request. While the DHCP protocol allows for multiple DHCP servers to make offers to the requesting (client) network node, and the (client) network node to pick one of the offers, in the preferred (DHT-based) implementation of the DHCP functionality according to the present invention, DHCP server entities automatically synchronize before handling a request, such that only one of them handles each broadcast request of a (client) network node. This advantageously improves overall system throughput (since DHCP server entities that "loose" an election do not duplicate work, but are free to handle other requests in parallel). These synchronizations are realized using the leases table (leases table part), using the above mentioned lock mechanism. Specifically, to handle a lease request (identified by the MAC address or the DUID of the (client) network node), one of the DHCP server entities first acquires a lock on the corresponding data item (within the leases table part) of that network node, i.e. the lease's corresponding row in the lease database. Therefore, it is assured according to the present invention that DHCP server entities handling different leases can hold such locks in parallel (i.e. for different lease requests or different (client) network nodes), but no two DHCP server entities can hold the lock on the same lease (i.e. regarding the same data item of the leases table part) at the same time.
Subsequently, the DHCP server entity that won the election for this particular lease request synchronizes over the IP addresses table (i.e. the IP pool table part), allocating a free IP address. A database synchronization method guarantees that no IP address is given to two different (client) network nodes, even if those two clients' lease requests are handled by two different DHCP server entities. Both synchronization mechanisms, i.e. the locks used to synchronize over the leases table (in the previous step) and the mechanism ensuring unique IP assignment from the IP addresses database (in this step), rely on distributed synchronization between multiple database servers, which works even in the event of failures of some of those servers (hence it is fault tolerant). Specifically according to the present invention, both mechanisms preferably rely on atomic Compare-And-Swap operations, which in turn are implemented using a distributed consensus algorithm (e.g. Paxos) over multiple DHT servers of the distributed data structure.
Subsequently, upon successfully grabbing or allocating an IP address for the lease it is handling, the DHCP server entity that won the election (to provide the requested lease) fills in the lease with all DHCP-specific parameters, based on its configuration and DHCP protocol semantics. These parameters include, for instance, lease expiration time (computed, e.g., from configuration parameters of the DHCP server entity, and the lease time the client network node requested), billing information, actions to be performed upon expiry etc. The completely filled-in lease (i.e. the data item) is then checkpointed into the leases table (leases table part) of the distributed data structure, also releasing the lock the DHCP server entity holds. Checkpointing and lock release preferably happen in a single atomic operation, to avoid concurrency problems.
Subsequently, following successful checkpointing, the DHCP server entity replies to the (client) network node with a DHCPOFFER packet, containing the lease that the DHCP server entity just checkpointed, over UDP unicast, as per the DHCP protocol.
Afterwards, upon receipt of the DHCPOFFER packet, the (client) network node issues a DHCPREQUEST packet back to the DHCP server entity, over UDP unicast, confirming interest for that lease.
Finally, upon receipt of the DHCPREQUEST packet, the DHCP server entity again acquires a lock on the leases table (i.e. the leases table part) - the lock corresponding again to the data item of the leases table part accessed in order to provide the lease - then, if DHCP server entity succeeds, it marks the lease allocation to the (client) network node as final, releases the lock, and confirms the lease allocation to the client network node with a DHCPACK packet.

However, also other trigger events (DHCP packets and events other than the above mentioned examples of DHCPOFFER and DHCPREQUEST), triggering the at least one DHCP server entity to access the distributed data structure are possible according to the present invention:
-- Lease expiration events, happening upon lease timer expiry at any of the participating DHCP server entities, if the (client) network node has not renewed its lease by that time,
-- Lease renewal requests, triggered by DHCPREQUEST packets from client (a DHCP (client) network node will attempt to renew a lease as he notices expiration time approaches),
-- Lease release packets, issued by the (client) network node when it wants to give up a lease (e.g. upon shutdown),
-- Lease abandonment events, happening in case that - between the steps of offering and ack-ing a lease (between the DHCPOFFER and DHCPACK packets) - a DHCP server entity notices, e.g. by pinging the IP address of the lease, that that IP address is in use by a different device (network node) on the network (this usually signals a misconfiguration, e.g. a static IP address somewhere on the network, overlapping the address pool of the DHCP server entity or handled by the DHCP functionality,
-- BOOTP packets, in case that the DHCP functionality and/or the DHCP entity also supports BOOTP protocol.
These other DHCP packets and events are handled in a similar manner:
The DHCP server entity attempting to handle a particular DHCP event acquires a lock on the corresponding lease row of the leases table (identified by the MAC address or the DUID of the (client) network node), i.e. the lock is acquired on the respective data item of the leases table part; the DHCP server entity then performs internal DHCP-specific computations (e.g. expires or abandons a lease and updates its internal structures); the DHCP server entity then checkpoints the new lease state and releases the lock it holds preferably in a single atomic step.

According to the present invention, by means of consistently handling DHCP operations via locks over the shared database, i.e. by using the mechanism of locking a specific data item of the leases table part - that is assigned to the lease of an IP address leased to the at least one network node -by the at least one DHCP server entity (accessing that specific data item), it is advantageously possible to ensure that race conditions are handled appropriately, including for instance:
-- A lease being renewed by a DHCP server entity while another DHCP server entity attempts to expire the lease,
-- A lease being released by a DHCP server entity while another DHCP server entity attempts to renew it,
-- Two DHCP server entities trying to offer an IP address for the same request at the same time.

According to a further embodiment of the present invention, the data items of the leases table part comprise, respectively, a lock structure, wherein in case that a data item of the leases table part is locked by any of the DHCP server entities, the lock structure comprises a locker entity information and a lock version information, the locker entity information being related to the locking DHCP server entity and the lock version information corresponding to a value that is modified, especially incremented or decremented, upon releasing of the lock.

Thereby, it is advantageously possible to implement the described locking mechanism of DHCP server entities accessing data items of the leases table part of the distributed data structure.

According to another embodiment of the present invention, in a fourth step, subsequent to the second step and in case that - regarding the specific data item of the leases table part - the corresponding DHCP server entity, having locked that specific data item, is in a state of failure prior to releasing the lock of the specific data item, the lock is rolled forward to a further DHCP server entity in case that sufficient time has elapsed compared to a predetermined time interval.

Thereby, it is advantageously possible according to the present invention to avoid situations where DHCP server entities crash (or partition from the database, i.e. loose their connection to the database) while holding a lock on a lease (i.e. on a data item of the leases table part). This is a potentially dangerous situation if unhandled, since then all other DHCP server entities that are alive and could help handle that DHCP request are blocked from doing so indefinitely, and the lease would never be granted to the (client) network node. Rolling forward the lock to another DHCP server entity avoids such problems.

Furthermore, the present invention relates to a DHCP entity according to claim 7.

It is thereby advantageously possible to provide a DHCP entity enabled to be used implementing the inventive method.

Furthermore, the present invention relates to a telecommunications network according to claim 8.

It is thereby advantageously possible to provide a telecommunications network enabled to be used implementing the inventive method.

Additionally, the present invention relates to a program comprising a computer readable program code according to claim 9.

Still additionally, the present invention relates to a computer program product according to claim 10.

According to a preferred embodiment of the present invention, the program is a distributed program and/or the computer program of the computer program product is a distributed computer program.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a DHCP functionality according to the present invention, comprising, exemplarily two DHCP server entities and a distributed data structure, the distributed data structure comprising a plurality of database nodes.
Figure 2 schematically illustrates the situation of a (client) network node requesting a DHCP service from the DHCP functionality by sending a request to the DHCP server entities, which in turn leads to one of the DHCP server entities accessing the distributed data structure.
Figure 3 schematically illustrates a flow diagram for realizing a locking functionality of the relation between, on the one hand, data items, and, on the other hand, DHCP server entities within the distributed data structure according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

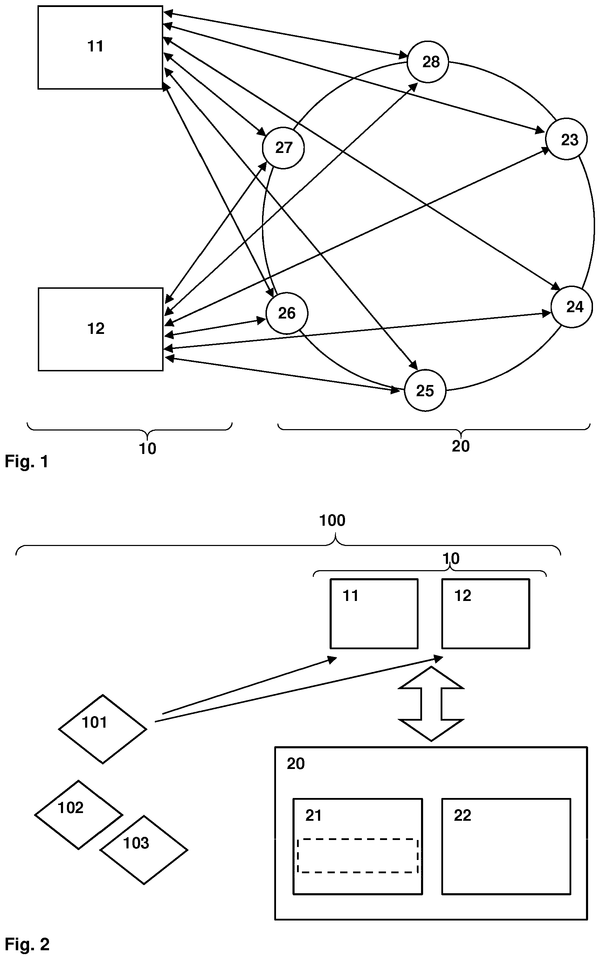

In Figure 1, a DHCP functionality according to the present invention is schematically shown. The DHCP functionality comprises a DHCP entity 10, comprising, exemplarily, two DHCP server entities, a first DHCP server entity 11 and a second DHCP server entity 12. The first and second DHCP server entity 11, 12 form a plurality of DHCP server entities providing, commonly, the DHCP functionality towards DHCP clients or network nodes (not shown in Figure 1) of a telecommunications network. According to the present invention, the DHCP functionality comprises - besides the DHCP entity 10, i.e. the DHCP server entities 11, 12 - a distributed data structure 20. The distributed data structure 20 comprises a plurality of database nodes, schematically represented in Figure 1 by means of circles and reference signs 23, 24, 25, 26, 27, 28. The distributed data structure 20 preferably implement a distributed hash table according to the present invention. A distributed hash table is a distributed database, i.e.it is logically a single database, but physically deployed at multiple instances. The algorithms of the distributed hash table distribute the keys and its associated values across all database nodes 23, 24, 25, 26, 27, 28 participating in the distributed hash table. The distributed hash table algorithm also handles situations as database nodes 23, 24, 25, 26, 27, 28 joining the distributed data structure, and database nodes 23, 24, 25, 26, 27, 28 leaving the distributed hash table. Furthermore, it is preferred according to the present invention to use a distributed hash table - as e.g. the Apache Cassandra distributed hash table - that extends the basic (Key, Value) storage model of typical distributed hash tables by providing tabular storage (organizing data in tables, columns, keyspaces etc.), build and maintain indexes over non-key columns, provide SQL-like query languages, etc.

In Figure 2 the situation of a (client) network node 101 requesting a DHCP service from the DHCP entity 10 is schematically shown. The network node 101 (or client network node 101) sends a request to the DHCP entity 10, i.e. to the DHCP server entities 11, 12, which in turn leads to one of the DHCP server entities 11, 12 accessing the distributed data structure 20. The network node 101 is part of the telecommunications network 100 comprising - besides the network node 101 - other network nodes, designated by reference signs 102 and 103. Therefore, the network node 101 is hereinafter also called the first network node 101, whereas the other network nodes are called the second network node 102 and the third network node 103.

According to the present invention, the distributed data structure 20 comprises at least a leases table part 21. The leases table part 21 comprises a set of data items. The data items of the leases table part 21 describe the complete state of all leases of IP addresses towards the network nodes 101, 102, 103 of the telecommunications network 100. Preferably, the leases table part 21 is keyed by the MAC addresses and/or the DUID of the network nodes 101, 102, 103.

According to the present invention, the realization of the DHCP functionality based on using the distributed data structure 20 preferably does not modify the frontend towards the (client) network nodes 101, 102, 103 in anyway.

According to the present invention, trigger events - such as a network node 101 requesting a DHCP functionality - trigger the first and/or the second DHCP server entity 11, 12 to access data items stored within the distributed data structure 20, especially data items of the leases table part 21.

As an example of a trigger event causing, e.g., the first DHCP server entity 11 to access a specific data item of the leases table part 21, the message flow of a basic DHCP lease request (or lease acquisition) is briefly described:
First, the (client) network node 101 sends a DHCPDISCOVER packet, reaching all DHCP server entities 11, 12 of the DHCP entity 10.
Subsequently, the DHCP server entities 11, 12 synchronize - using a lock mechanism - such that only one DHCP server entity 11 (of the plurality of DHCP server entities 11, 12) handles the DHCP request. To handle a lease request (e.g. identified by the MAC address or the DUID of the (client) network node 101), e.g. the first DHCP server entity 11 acquires a lock on the corresponding specific data item (within the leases table part 21) of that network node 101, i.e. the lease's corresponding row in the lease database 21.
Subsequently, the DHCP server entity 11 synchronizes over the IP pool table part 21, allocating (or grabbing) a free IP address.
Subsequently, upon successfully grabbing or allocating an IP address for the lease it is handling, the DHCP server entity 11 fills in the lease with all DHCP-specific parameters. The completely filled-in lease (i.e. the data item) is then checkpointed into the leases table (leases table part 21) of the distributed data structure 20, also releasing the lock the DHCP server entity 11 holds.
Subsequently, following successful checkpointing, the DHCP server entity 11 replies to the (client) network node 101 with a DHCPOFFER packet, containing the lease.
Afterwards, upon receipt of the DHCPOFFER packet, the (client) network node 101 issues a DHCPREQUEST packet back to the DHCP server entity 11.
Finally, upon receipt of the DHCPREQUEST packet, the DHCP server entity 11 again acquires a lock on the leases table 21 (i.e. the leases table part 21) - the lock corresponding again to the specific data item of the leases table part (of the first network node 101) accessed in order to provide the lease - and it marks the lease allocation to the (client) network node 101 as final.

The sequence described the basic (or failure-free) flow of handling a DHCP lease request. According to the present invention, the inventive method (and the inventive DHCP entity/telecommunications network/distributed data structure) allows for crashes or failures of DHCP server entities 11, 12 at any point in the flow of the protocol:
Crash-restart case: If a DHCP server entity 11, 12 that granted a lease to a client network node 101, 102, 103 crashes and is restarted before the client network node 101, 102, 103 attempts to renew that lease, the DHCP server entity will restore its state from the distributed data structure (distributed hash table database) upon restart, and so will be able to renew the lease as usual, when contacted by the client network node 101, 102, 103 over UDP unicast (via DHCPREQUEST).
Crash-no-restart case: If a DHCP server entity 11, 12 that granted a lease to a client network node 101, 102 ,103 crashes and never recovers, or recovers only after the lease renewal attempt, or is partitioned (i.e. disconnected) from the client network node 101, 102, 103, the client network node 101, 102, 103 will first issue a number of unicast retries to the same DHCP server entity 11, 12 that issued the lease.
However, by the DHCP protocol, if the client network node 101, 102, 103 notices no response from the DHCP server entity 11, 12 after a number of retries, it will start issuing broadcast DHCPREQUESTs to renew the lease. At this point, any live DHCP server entity 11, 12 that receives the broadcast request can grab a lock on the lease row (i.e. on the specific data item related to the lease to the respective network node 101, 102, 103) in the database, renew the lease that his peer DHCP server entity 11, 12 previously granted, and acknowledge it back to the client network node 101, 102, 103. Therefore, the client network node 101, 102, 103 is able to keep the same IP address, unlike in the case where different DHCP servers manage non-overlapping IP address ranges, where such a network node 101, 102, 103 would have to get a completely different IP address (i.e. a new one), therefore tearing down any existing TCP connections of that network node 101, 102, 103 in question.

Crash between discover and request packets: If a DHCP server entity 11, 12 crashes after it offered a lease to a client network node 101, 102, 103 (e.g. issued a DHCPOFFER as response to a DHCPDISCOVER), but before it managed to successfully handle the following DHCPREQUEST from the same client network node 101, 102, 103, a different DHCP server entity 11, 12 can help to acknowledge the lease - handle the DHCPREQUEST, once the client network node 101, 102, 103 broadcasts it - by grabbing (or allocating) the lock to the lease (i.e. the respective specific data item of the leases table part 21) and updating its state in the distributed data structure, especially a shared DHT database.

Crash while holding lock: If a DHCP server entity 11, 12 crashes while holding a lock (e.g. in the middle of handling a DHCPDISCOVER), it is advantageously possible according to the present invention that another DHCP server entity 11, 12 (i.e. a different DHCP server entity) will eventually "roll forward" (preempt the lock) and finish handling the request on behalf of its crashed peer DHCP server entity 11, 12.

Handling partitions and stale state: According to the present invention, even if a DHCP server entity 11, 12 is partitioned and its view on the state of a lease becomes stale compared to the state in the database, the case can be handled: Basically, lease locks are attached a version number, and DHCP server entities 11, 12 are forced to acquire the latest lease state in the database before being allowed to update a lease.

The locking mechanism or locking functionality according to the present invention has the following features: locks are defined per-lease (i.e. referring to a data item of the leases table part 21) rather than per-table (i.e. referring to a complete table such as the complete leases table part 21). Otherwise said, a DHCP server entity 11, 12 can lock individual rows in the lease table (i.e. individual data items), rather than the whole tables, which helps concurrency by allowing parallel handling of lease requests.

According to the present invention, locks or lock structures placed on a lease row (i.e. within a data item of the leases table part 21) have, e.g., two fields:
A locker field, containing the ID of the server currently holding the lock, i.e. an identifier of the DHCP server entity 11, 12, (or, e.g., the value "NULL" if the lease is currently unlocked). The locker field is hereinafter also called locker entity information.
A version field, containing, e.g. an integer number which gets, e.g., incremented each time the lock gets released. The version field is also called lock version information, and it corresponds to a value (such as an integer value) that is modified, especially incremented or decremented, upon releasing of the lock.

It is preferred according to the present invention that releasing a lock always happens in an atomic operation with checkpointing the other fields of a lease, therefore the version field in the lock also corresponds to the version of the lease data (i.e. gets, e.g., incremented at each lease checkpoint).

In case that a DHCP server entity 11, 12 attempts to acquire a lease lock (i.e. a specific data item), the DHCP server entity 11, 12 tries to place its own server ID in the locker field (locker entity information) of the lock in the corresponding lease row (identified by the MAC or DUID information of the respective client network node 101, 102, 103). As a parameter to the lock attempt operation, the DHCP server entity 11, 12 also includes (as the lock version information) the last version of the lease it is aware of. The database, i.e. the distributed data structure 20, might have a newer version, but never an older one, as granted leases never get deleted, but only get there state updated - e.g. to "free" upon expiry. The lock attempt operation can have one of the following outcomes:
OK: This is returned if: (1) Lease row (i.e. the data item of the leases table part 21) was unlocked, and, (2) the DHCP server entity 11, 12 has the same lease version (lock version information) as that in the database; lock attempt succeeded and the local server, i.e. the DHCP server entity 11, 12 handling that lock, is now the owner of the lock;
ALREADY_LOCKED This is returned if (1) Lease row was locked by a different server (DHCP server entity 11, 12), and, (2) The DHCP server entity 11, 12 has the same lease version (lock version information) as the distributed data structure (20);
BAD_VERSION This is returned if the DHCP server entity 11, 12 has a different lease version (lock version information) than the database 20 (whether the lease was locked or not);
NO_ROW This is returned if the lease row (i.e. the specific data item) that the DHCP server entity 11, 12 is trying to lock did not exist in the database 20.

According to the present invention, these states can be used to handle stale lease versions, as discussed below. Lease locks are preferably implemented as atomic Compare-And-Swap operations, that are guaranteed to either succeed at all server replicas (i.e. copies of the content of database nodes 23, 24, 25, 26, 27, 28), or fail at all and leave no side effects. For instance, assuming a lease row is replicated by database nodes 23, 24, and 25 (or Cassandra nodes or Cassandra servers), it is not possible for database nodes 23 and 24 to grant a lock to, e.g., the first DHCP server entity 11, while database node 25 leaves the lease unlocked. The Compare-And-Swap primitive is preferably implemented underneath using a consensus algorithm (Paxos).

The Lease unlocks and checkpoints are similarly implemented by Compare-And-Swap operations: A lease unlock and checkpoint only succeeds if the DHCP server entity 11, 12 still holds the lock and fails otherwise. Lease data is only updated in the database 20 if lease unlock succeeded at all database servers or database nodes 23, 24, 25, 26, 27, 28 in the same atomic step as the unlock.

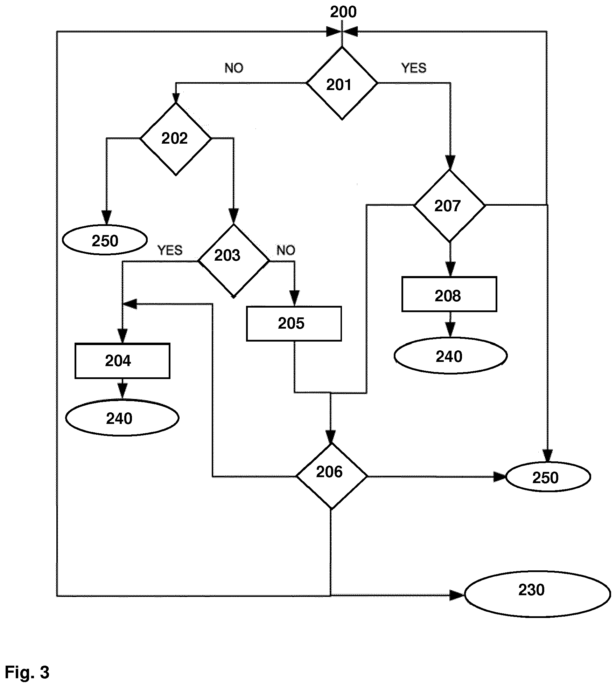

Figure 3 schematically illustrates a flow diagram for realizing a locking functionality of the relation between, on the one hand, data items, and, on the other hand, DHCP server entities 11, 12 within the distributed data structure 20 according to the present invention. Figure 3 shows the complete flow diagram of the locking of a data item by a DHCP server entity 11, 12, including lock roll-forward and versioning. Also cases of a missing lease entry in the database are handled.

The initial state - represented by reference sign 200 in Figure 3 - corresponds to the DHCP server entity 11, 12 attempts to acquire a lease lock, i.e. a lock on a data item of the leases table part 21. The flow continues to a first processing step - represented by reference sign 201 in Figure 3 - that checks whether the lease exists locally (i.e. within the DHCP server entity 11, 12). If the result of this check is negative, the flow branches to a second processing step, represented by reference sign 202. If the result of the check at the first processing step 201 is positive, the flow branches to a seventh processing step, represented by reference sign 207.

At the second processing step 202 the DHCP server entity 11, 12 tries to add the respective lease (i.e. the data item) in the local memory of the DHCP server entity 11, 12. The function try_add_lease() is a basic function that attempts to add a fresh lease into the distributed data structure 20, i.e. the distributed hash table database 20, and fails if an entry for that lease key (i.e. typically the MAC address of the DUID of the network node 101, 102, 103) existed already in the database 20; if successful, the lease is added with a lock already placed on it, owned by the local server. If this attempt to add the respective lease succeeds, the flow branches to a first result processing step 250, the first result processing step 250 corresponding to successfully having the respective lease in the local database of the DHCP server entity 11, 12 and already having placed a lock on it. If the attempt, at the second processing step 202, to add the respective lease does not succeed, the flow branches to a third processing step 203 that checks whether the lock version information of the database 20 differs from the lock version information locally stored within the respective DHCP server entity 11, 12 (especially whether the lock version information of the database 20 is greater than the lock version information locally stored within the respective DHCP server entity 11, 12). If the result of this check is positive, the flow branches to a fourth processing step, represented by reference sign 204. If the result of the check at the third processing step 203 is negative, the flow branches to a fifth processing step, represented by reference sign 205.

At the fourth processing step 204, the DHCP server entity 11, 12 installs the lease (i.e. the data item) locally and the flow branches to a second result processing step 240, the second result processing step corresponding to the error state "BAD_VERSION".

At the fifth processing step 205, the DHCP server entity 11, 12 asserts that the lease is locked by the respective DHCP server entity 11, 12, and the flow continues to a sixth processing step 206.

At the sixth processing step 206, the DHCP server entity 11, 12 tries to roll forward the lock. The function try_roll_forward() is the roll forward function that attempts to pre-empt a lock held by a different DHCP server entity 11, 12 and acquire it for the current DHCP server entity 11, 12. This attempt only succeeds if enough time has passed since the owning DHCP server entity 11, 12 has changed the lock and if the current (pre-empting) DHCP server entity 11, 12 holds the latest version of the lock. Like the try_lock() function, it can return one of the following results: OK / ALREADY_LOCKED / BAD_VERSION / NO_ROW.

In case that - at the sixth processing step 206 - a bad version of the lock version information is detected, the flow branches to the fourth processing step 204. In case that - at the sixth processing step 206 - an error state "NO_ROW" is detected, the flow proceeds to the first processing step 201. In case that - at the sixth processing step 206 - an error state "ALREADY_LOCKED" is detected, the flow proceeds to a third result processing step 230, the third result processing step 230 corresponding to the error state "ALREADY_LOCKED". In case that - at the sixth processing step 206 - rolling forward of the lock succeeds, the flow continues to the first result processing step 250, the third result processing step 250 corresponding to successfully locking the corresponding data item.

At the seventh processing step 207, the DHCP server entity 11, 12 tries to lock the respective lease (i.e. the data item). The try_lock() function is the basic lock attempt function. It is able to return one of the following results: OK / ALREADY_LOCKED / BAD_VERSION / NO_ROW. It does no retrying or roll forward attempts.

In case that - at the seventh processing step 207 - an error state "ALREADY_LOCKED" is detected, the flow proceeds to the sixth processing step 206. In case that - at the seventh processing step 207 - an error state "BAD_VERSION" is detected, the flow proceeds to an eighth processing step 208. In case that - at the seventh processing step 207 - locking of the data item is successful (i.e. the result is "OK") the flow continues to the third result processing step 250, the third result processing step 250 corresponding to successfully locking the corresponding data item. At the eighth processing step 208, the DHCP server entity 11, 12 installs the lease (i.e. the data item) locally and the flow branches to the second result processing step 240 (corresponding to the error state "BAD_VERSION").

Like the function try_lock(), also the functions try_add_lease() and try_roll_forward() typically (and preferably) use Compare-And-Swap operations, implemented underneath by a consensus protocol among the database nodes 23, 24, 25, 26, 27, 28 of the distributed hash table database to ensure correctness and fault tolerance of the operations.

According to the present invention, it is possible for DHCP server entities 11, 12 to crash or partition from the database 20 while holding a lock on a lease. This is a potentially dangerous situation if unhandled, since then all other DHCP server entities 11, 12 that are alive and that could help handle that client's request are blocked from doing so indefinitely. This means that the lease would never be granted to the client. To handle this situation, it is proposed according to the present invention that locks are able to be rolled forward.

If it is assumed that the first DHCP server entity 11 tries to grab a lock on a lease (e.g. regarding the first network node 101) and fails with a ALREADY_LOCKED state (i.e. because the lock is already held by some other DHCP server entity such as the second DHCP server entity 12). The first DHCP server entity 11 will then remember locally the lock state that it saw, as the pair (locker, version), i.e. the pair of, on the one hand, the locker entity information, corresponding to the DHCP server entity holding the lock (i.e. in the exemplary case the second DHCP server entity 12), and, on the other hand, the lock version information, corresponding to the version number as stored by the second DHCP server entity 12. The first DHCP server entity 11 thus detects the current DHCP server entity (i.e. the second DHCP server entity 12) holding the lock as well as the current lock version (lock version information) held in the database 20. The first DHCP server entity 11 preferably also remembers the local time that it detected this pair of information and gives up the lock, i.e. it give up to try to lock this data item. If this state is described as (DHCP server entity = second DHCP server entity 12, version = x1, timestamp = t1), then at a later time, e.g. on a subsequent retry of the (client) network node 101, the first DHCP server entity 11 again tries to grab that lock, and again fails, this time detecting the state (DHCP server entity = second DHCP server entity 12, version = x2, timestamp = t2). If either the locking DHCP server entity differs or the respective pieces of lock version information differ (x1 ≠ x2) or the time stamps differ sufficiently (t2 - t1 ≤ T), i.e. T being a configurable predetermined time interval (or a time threshold), the first DHCP server entity 11 remembers the new lock state and again gives up the lock. Essentially, the first DHCP server entity 11 notices that the lock state has somehow progressed (either it has been unlocked or grabbed by another DHCP server entity, i.e. the locker entity information differs between the two lock states) or that either the lock version information has changed or not enough time (compared to the predetermined time interval) has passed for it to try to pre-empt (roll forward) the lock.

However, the lock state that the first DHCP server entity 11 detects corresponds to the locker entity information being the same (i.e. the second DHCP server entity 12) and the lock version information being the same (x1 = x2), and (as well) the lock state being unchanged for a sufficient time interval compared to the predetermined time interval T, (i.e. t2 - t1 > T) - so basically if the lock has been held by the same DHCP server entity for a long enough time, without being unlocked, the first DHCP server entity 11 tries to roll forward the lock. That means that it tries to place its own server ID in the locker field (locker entity information) of the lock, while keeping the same lock version (lock version information). This attempt is again preferably made via a single, atomic Compare-And-Swap operation, and, like lock / unlock attempts, might succeed or fail (due, e.g., to different lockers, i.e. DHCP server entities, having pre-empted the lock in the meantime, the version having changed, or the row having disappeared in the meantime).

Rolling locks forward guarantees that a DHCP server entity 11, 12 crashing or partitioning while holding a lock does not block the overall progress of the DHCP entity 10, because the lock will eventually be successfully rolled forward by another DHCP server entity of the DHCP entity..

According to the present invention, it is also advantageously possible to handle stale lease states at DHCP server entities: It is also possible that a DHCP server entity 11, 12 is unaware of operations made on some lease, by another DHCP server entity 11, 12 in the database 20. This can in fact happen quite often. For instance, with two DHCP server entities 11, 12, and the first (client) network node 101 requesting leases, where the first DHCP server entity 11 and the second DHCP server entity 12 share the same distributed data structure 20, i.e. the same distributed hash table database 20, the DHCP server entities 11, 12 cooperate to handle leases to the network node 101, and both DHCP server entities 11, 12 are reachable for the network node 101 over broadcast: In case that the first DHCP server entity 11 grabs the lock to handle the initial DHCPDISCOVER packet sent by the network node 101, the first DHCP server entity 11 offers a lease to the network node 101 and also handles the subsequent DHCPREQUEST from the network node 101. This progresses the version of the lease (i.e. the lock version information) to, e.g., "2"; in case that the first DHCP server entity 11 handles three further successive lease renewal requests (that arrive to it via UDP unicast) from the network node 101, the first DHCP server entity 11 progresses the lease version (lock version information) to, e.g., "5". Now, in case that the first DHCP server entity 11 crashes or partitions away from the network node 101 for a sufficiently long time, the network node 101, upon noticing that the first DHCP server entity 11 doesn't respond to its unicast renewal requests, will start to broadcast its request and reach the second DHCP server entity 12. However, if the second DHCP server entity 12 is not aware that the lease version (lock version information) associated to the lease (i.e. the corresponding (specific) data item of the leases table part 21) corresponds to "5" (since the second DHCP server entity 12 has not participated in previous changes to the lease state), it will fail to grab the lock on the lease row to network node 101, with an error status "BAD_VERSION". In this situation, the second DHCP server entity 12 will first read in the latest lease state (including lease data, and version (lock version information) corresponding to, e.g., "5") from the database 20. Only then the second DHCP server entity 12 will retry to grab the lock and, in case no other DHCP server entity didn't modify the lock (by either locking it or progressing the version), the second DHCP server entity 12 will succeed and proceed to handle the renewal request of the first network node 101.

Later on, it is possible that the first DHCP server entity 11 is again connected (i.e. it comes back from partition or it is restarted). If it ever needs to handle a renewal request from the first network node 101 again, it will first notice that the lease version (lock version information) has progressed in the database 20 further than it was aware of, via the lock versioning mechanism.

## Claims

1. Method for enhancing the availability, scalability and/or performance of a DHCP functionality (Dynamic Host Configuration Protocol functionality) provided by a DHCP entity (10) - comprising multiple, cooperating DHCP server entities (11, 12) - within a telecommunications network (100), said DHCP server entities (11, 12) sharing the state of a database held in a distributed data structure (20) that the DHCP server entities (11, 12) of the DHCP entity (10) are able to access, wherein the distributed data structure (20) is configured to store data items in order for the DHCP entity (10) to provide the DHCP server functionality towards network nodes (101, 102, 103) within the telecommunications network (100), wherein the distributed data structure (20) is a distributed hash table,
wherein the distributed data structure (20) comprises a leases table part (21), the leases table part (21) comprises a set of data items, the data items of the leases table part (21) describing the complete state of all leases of IP addresses (Internet Protocol addresses) towards the network nodes (101, 102, 103) of the telecommunications network (100), wherein the leases table part (21) is keyed by the MAC addresses (Media Access Control addresses) and/or the DUID (DHCP Unique Identifier) of the network nodes (101, 102, 103), wherein the method comprises the following steps:
-- in a first step, at least one DHCP server entity (11, 12) is triggered by a trigger event to access the distributed data structure (20),
-- in a second step, subsequent to the first step, the at least one DHCP server entity (11, 12) accesses the distributed data structure (20) in such a manner that a specific data item of the leases table part (21) - that is assigned to the lease of an IP address leased to the at least one network node (101, 102, 103) - is locked by the at least one DHCP server entity (11, 12),
-- in a third step, subsequent to the second step, and after the specific data item of the leases table part (21) has been generated and/or updated and/or otherwise modified, the lock of the specific data item is released by the at least one DHCP server entity (11, 12),
wherein the trigger event triggering the at least one DHCP server entity (11, 12) to access the distributed data structure (20) corresponds to at least one out of the following:
-- a lease expiration event, especially due to the expiry of a lease timer,
-- the reception, at the at least one DHCP server entity (11, 12), of a request message from the at least one network node (101, 102, 103), the request message especially referring to a lease acquisition request and/or a lease renewal request, especially by means of a DHCPREQUEST message and/or a DHCPDISCOVER message,
-- the reception, at the at least one DHCP server entity (11, 12), of a lease release message from the at least one network node (101, 102, 103),
-- a lease abandonment event.

2. Method according to claim 1, wherein the distributed data structure (20) comprises, besides the leases table part (21), an IP pool table part (22), wherein the IP pool table part (22) comprises a further set of data items, the data items of the IP pool table part (22) comprising all IP addresses that have been given as leases towards the network nodes (101, 102, 103) of the telecommunications network (100), wherein the IP pool table part (22) is keyed by the IP addresses of the leases of IP addresses given to the network nodes (101, 102, 103).

3. Method according to one of the preceding claims, wherein the data items of the IP pool table part (22) comprise, respectively, the MAC address and/or the DUID (DHCP Unique Identifier) of the respective network node (101, 102, 103),
wherein especially the IP pool table part (22) is populated only at the time a lease is given to one of the network nodes (101, 102, 103).

4. Method according to one of the preceding claims, wherein the data items of the leases table part (21) comprise, respectively, all pieces of information describing the lease, including at least:
-- the lease IP address,
-- the granting time of the lease,
-- the expiration time of the lease,
-- the binding state of the lease,
wherein the data items of the leases table part (21) especially comprise, respectively, additional implementation-specific pieces of information of the lease, comprising at least one out of the following:
-- the next lease state upon time expiry,
-- the billing class of the lease,
-- information derived from server configuration.

5. Method according to one of the preceding claims, wherein the data items of the leases table part (21) comprise, respectively, a lock structure, wherein in case that a data item of the leases table part (21) is locked by any of the DHCP server entities (11, 12), the lock structure comprises a locker entity information and a lock version information, the locker entity information being related to the locking DHCP server entity (11, 12) and the lock version information corresponding to a value that is modified, especially incremented or decremented, upon releasing of the lock.

6. Method according to one of the preceding claims, wherein, in a fourth step, subsequent to the second step and in case that - regarding the specific data item of the leases table part (21) - the corresponding DHCP server entity (11, 12), having locked that specific data item, is in a state of failure prior to releasing the lock of the specific data item, the lock is rolled forward to a further DHCP server entity (11, 12) in case that sufficient time has elapsed compared to a predetermined time interval.

7. DHCP entity (10) for enhancing the availability, scalability and/or performance of a DHCP functionality (Dynamic Host Configuration Protocol functionality) provided by a DHCP entity (10) - comprising multiple, cooperating DHCP server entities (11, 12) - within a telecommunications network (100), said DHCP server entities (11, 12) sharing the state of a database held in a distributed data structure (20) that the DHCP server entities (11, 12) of the DHCP entity (10) are able to access, wherein the distributed data structure (20) is configured to store data items in order for the DHCP entity (10) to provide the DHCP server functionality towards network nodes (101, 102, 103) within the telecommunications network (100), wherein the distributed data structure (20) is a distributed hash table,
wherein the distributed data structure (20) comprises a leases table part (21), the leases table part (21) comprises a set of data items, the data items of the leases table part (21) describing the complete state of all leases of IP addresses (Internet Protocol addresses) towards the network nodes (101, 102, 103) of the telecommunications network (100), wherein the leases table part (21) is keyed by the MAC addresses (Media Access Control addresses) and/or the DUID (DHCP Unique Identifier) of the network nodes (101, 102, 103), wherein the DHCP entity (10) is configured such that:
-- at least one DHCP server entity (11, 12) is triggered by a trigger event to access the distributed data structure (20),
-- the at least one DHCP server entity (11, 12) accesses the distributed data structure (20) in such a manner that a specific data item of the leases table part (21) - that is assigned to the lease of an IP address leased to the at least one network node (101, 102, 103) - is locked by the at least one DHCP server entity (11, 12),
-- after the specific data item of the leases table part (21) has been generated and/or updated and/or otherwise modified, the lock of the specific data item is released by the at least one DHCP server entity (11, 12),
wherein the trigger event triggering the at least one DHCP server entity (11, 12) to access the distributed data structure (20) corresponds to at least one out of the following:
-- a lease expiration event, especially due to the expiry of a lease timer,
-- the reception, at the at least one DHCP server entity (11, 12), of a request message from the at least one network node (101, 102, 103), the request message especially referring to a lease acquisition request and/or a lease renewal request, especially by means of a DHCPREQUEST message and/or a DHCPDISCOVER message,
-- the reception, at the at least one DHCP server entity (11, 12), of a lease release message from the at least one network node (101, 102, 103),
-- a lease abandonment event.

8. Telecommunications network (100) for enhancing the availability, scalability and/or performance of a DHCP functionality (Dynamic Host Configuration Protocol functionality) comprising a DHCP entity (10) according to claim 7.

9. Program comprising a computer readable program code which, when executed on a computer or on a DHCP entity (10) or on a DHCP server entity (11, 12) or on a database node (23, 24, 25, 26, 27, 28) or in part on a DHCP entity (10) and/or in part on a DHCP server entity (11, 12) and/or in part on a database node (23, 24, 25, 26, 27, 28) causes the computer or the DHCP entity (10) or the DHCP server entity (11, 12) or the database node (23, 24, 25, 26, 27, 28) to perform a method according to one of claims 1 to 6.

10. Computer program product for realizing a DHCP functionality within a telecommunications network (100), the computer program product comprising the program according to claim 9.

## Patentansprüche

1. Verfahren zum Verbessern der Verfügbarkeit, Skalierbarkeit und/oder Leistung einer DHCP (Dynamic Host Configuration Protocol)-Funktionalität, die durch eine DHCP-Entität (10), die mehrere zusammenwirkende DHCP-Server-Entitäten (11, 12) umfasst, bereitgestellt wird, innerhalb eines Telekommunikationsnetzes (100), wobei die DHCP-Server-Entitäten (11, 12) den Zustand einer Datenbank gemeinsam haben, die in einer verteilten Datenstruktur (20) verwaltet wird, auf die die DHCP-Server-Entitäten (11, 12) der DHCP-Entität (10) zugreifen können, wobei die verteilte Datenstruktur (20) dafür ausgestaltet ist, Datenelemente zu speichern, damit die DHCP-Entität (10) die DHCP-Server-Funktionalität für die Netzknoten (101, 102, 103) innerhalb des Telekommunikationsnetzes (100) bereitstellen kann, wobei die verteilte Datenstruktur (20) eine verteilte Hash-Tabelle ist,
wobei die verteilte Datenstruktur (20) einen Leases-Tabellenteil (21) umfasst, wobei der Leases-Tabellenteil (21) einen Satz von Datenelementen umfasst, wobei die Datenelemente des Leases-Tabellenteils (21) den vollständigen Zustand aller Leases von IP-Adressen (Internet Protocol-Adressen) zu den Netzknoten (101, 102, 103) des Telekommunikationsnetzes (100) beschreiben, wobei der Leases-Tabellenteil (21) durch die MAC (Media Access Control)-Adressen und/oder die DUID (DHCP Unique Identifier) der Netzknoten (101, 102, 103) getastet wird, wobei das Verfahren die folgenden Schritte umfasst:
- in einem ersten Schritt wird mindestens eine DHCP-Server-Entität (11, 12) durch ein Auslöseereignis ausgelöst, auf die verteilte Datenstruktur (20) zuzugreifen,
- in einem zweiten Schritt, im Anschluss an den ersten Schritt, greift die mindestens eine DHCP-Server-Entität (11, 12) auf die verteilte Datenstruktur (20) in einer solchen Weise zu, dass ein spezielles Datenelement des Leases-Tabellenteils (21), der dem Lease einer IP-Adresse zugewiesen ist, die an den mindestens einen Netzknoten (101, 102, 103) geleast wird, durch die mindestens eine DHCP-Server-Entität (11, 12) verriegelt wird,
- in einem dritten Schritt, im Anschluss an den zweiten Schritt, und nachdem das spezielle Datenelement des Leases-Tabellenteils (21) generiert und/oder aktualisiert und/oder auf sonstige Weise modifiziert wurde, wird die Verriegelung des speziellen Datenelements durch die mindestens eine DHCP-Server-Entität (11, 12) aufgehoben,
wobei das Auslöseereignis, das die mindestens eine DHCP-Server-Entität (11, 12) auslöst, auf die verteilte Datenstruktur (20) zuzugreifen, mindestens einem von Folgendem entspricht:
- einem Lease-Ablaufereignis, insbesondere aufgrund des Ablaufens eines Lease-Timers,
- dem Empfang, in der mindestens einen DHCP-Server-Entität (11, 12), einer Anforderungsnachricht von dem mindestens einen Netzknoten (101, 102, 103), wobei die Anforderungsnachricht insbesondere auf eine Lease-Beschaffungsanforderung und/oder eine Lease-Erneuerungsanforderung verweist, insbesondere mittels einer DHCPREQUEST-Nachricht und/oder einer DHCPDISCOVER-Nachricht,
- dem Empfang, in der mindestens einen DHCP-Server-Entität (11, 12), einer Lease-Aufhebungsnachricht von dem mindestens einen Netzknoten (101, 102, 103),
- einem Lease-Aufgabeereignis.

2. Verfahren nach Anspruch 1, wobei die verteilte Datenstruktur (20), neben dem Leases-Tabellenteil (21), einen IP-Pool-Tabellenteil (22) umfasst, wobei der IP-Pool-Tabellenteil (22) einen weiteren Satz von Datenelementen umfasst, wobei die Datenelemente des IP-Pool-Tabellenteils (22) alle IP-Adressen umfassen, die als Leases an die Netzknoten (101, 102, 103) des Telekommunikationsnetzes (100) gegeben wurden, wobei der IP-Pool-Tabellenteil (22) durch die IP-Adressen der Leases von IP-Adressen getastet wird, die an die Netzknoten (101, 102, 103) gegeben wurden.

3. Verfahren nach einem der vorangehenden Ansprüche, wobei die Datenelemente des IP-Pool-Tabellenteils (22) jeweils die MAC-Adresse und/oder den DUID (DHCP Unique Identifier) des jeweiligen Netzknotens (101, 102, 103) umfassen, wobei insbesondere der IP-Pool-Tabellenteil (22) nur zu der Zeit ausgefüllt wird, wo einem der Netzknoten (101, 102, 103) ein Lease gegeben wird.

4. Verfahren nach einem der vorangehenden Ansprüche, wobei die Datenelemente des Leases-Tabellenteils (21) jeweils alle Informationsteile umfassen, welche die Lease beschreiben, mindestens einschließlich des Folgenden:
- die Lease-IP-Adresse,
- die Gewährungszeit der Lease,
- die Ablaufzeit der Lease,
- der Bindungszustand der Lease,
wobei die Datenelemente des Leases-Tabellenteils (21) jeweils insbesondere zusätzliche implementierungsspezifische Informationsteile der Lease umfassen, die mindestens eines von Folgendem umfassen:
- der nächste Lease-Zustand bei Zeitablauf,
- die Inrechnungstellungsklasse der Lease,
- Informationen, die aus der Serverkonfiguration abgeleitet wurden.

5. Verfahren nach einem der vorangehenden Ansprüche, wobei die Datenelemente des Leases-Tabellenteils (21) jeweils eine Verriegelungsstruktur umfassen, wobei für den Fall, dass ein Datenelement des Leases-Tabellenteils (21) durch eine der DHCP-Server-Entitäten (11, 12) verriegelt wird, die Verriegelungsstruktur einen Verriegelerentität-Information und eine Verriegelungsversions-Informationen umfasst, wobei die Verriegelerentität-Information sich auf die verriegelnde DHCP-Server-Entität (11, 12) bezieht und die Verriegelungsversions-Information einem Wert entspricht, der modifiziert, insbesondere erhöht oder verringert, wird, sobald die Verriegelung aufgehoben wird.

6. Verfahren nach einem der vorangehenden Ansprüche, wobei, in einem vierten Schritt, im Anschluss an den zweiten Schritt, und für den Fall, dass - bezüglich des speziellen Datenelements des Leases-Tabellenteils (21) - die entsprechende DHCP-Server-Entität (11, 12), die das spezielle Datenelement verriegelt hat, in einem Ausfallzustand ist, bevor die Verriegelung des speziellen Datenelements aufgehoben wird, die Verriegelung zu einer weiteren DHCP-Server-Entität (11, 12) übertragen wird, falls
- im Vergleich zu einem zuvor festgelegten Zeitintervall
- genügend Zeit verstrichen ist.

7. DHCP-Entität (10) zum Verbessern der Verfügbarkeit, Skalierbarkeit und/oder Leistung einer DHCP (Dynamic Host Configuration Protocol)-Funktionalität, die durch eine DHCP-Entität (10), die mehrere zusammenwirkende DHCP-Server-Entitäten (11, 12) umfasst, bereitgestellt wird, innerhalb eines Telekommunikationsnetzes (100), wobei die DHCP-Server-Entitäten (11, 12) den Zustand einer Datenbank gemeinsam haben, die in einer verteilten Datenstruktur (20) verwaltet wird, auf welche die DHCP-Server-Entitäten (11, 12) der DHCP-Entität (10) zugreifen können, wobei die verteilte Datenstruktur (20) dafür ausgestaltet ist, Datenelemente zu speichern, damit die DHCP-Entität (10) die DHCP-Server-Funktionalität für die Netzknoten (101, 102, 103) innerhalb des Telekommunikationsnetzes (100) bereitstellen kann, wobei die verteilte Datenstruktur (20) eine verteilte Hash-Tabelle ist,
wobei die verteilte Datenstruktur (20) einen Leases-Tabellenteil (21) umfasst, wobei der Leases-Tabellenteil (21) einen Satz von Datenelementen umfasst, wobei die Datenelemente des Leases-Tabellenteils (21) den vollständigen Zustand aller Leases von IP-Adressen (Internet Protocol-Adressen) zu den Netzknoten (101, 102, 103) des Telekommunikationsnetzes (100) beschreiben, wobei der Leases-Tabellenteil (21) durch die MAC (Media Access Control)-Adressen und/oder die DUID (DHCP Unique Identifier) der Netzknoten (101, 102, 103) getastet wird, wobei die DHCP-Entität (10) so ausgestaltet ist, dass:
- mindestens eine DHCP-Server-Entität (11, 12) durch ein Auslöseereignis ausgelöst wird, auf die verteilte Datenstruktur (20) zuzugreifen,
- die mindestens eine DHCP-Server-Entität (11, 12) auf die verteilte Datenstruktur (20) in einer solchen Weise zugreift, dass ein spezielles Datenelement des Leases-Tabellenteils (21), der dem Lease einer IP-Adresse zugewiesen ist, die an den mindestens einen Netzknoten (101, 102, 103) geleast wird, durch die mindestens eine DHCP-Server-Entität (11, 12) verriegelt wird,
- nachdem das spezielle Datenelement des Leases-Tabellenteils (21) generiert und/oder aktualisiert und/oder auf sonstige Weise modifiziert wurde, die Verriegelung des speziellen Datenelements durch die mindestens eine DHCP-Server-Entität (11, 12) aufgehoben wird,
wobei das Auslöseereignis, das die mindestens eine DHCP-Server-Entität (11, 12) auslöst, auf die verteilte Datenstruktur (20) zuzugreifen, mindestens einem von Folgendem entspricht:
- einem Lease-Ablaufereignis, insbesondere aufgrund des Ablaufens eines Lease-Timers,
- dem Empfang, in der mindestens einen DHCP-Server-Entität (11, 12), einer Anforderungsnachricht von dem mindestens einen Netzknoten (101, 102, 103), wobei die Anforderungsnachricht insbesondere auf eine Lease-Beschaffungsanforderung und/oder eine Lease-Erneuerungsanforderung verweist, insbesondere mittels einer DHCPREQUEST-Nachricht und/oder einer DHCPDISCOVER-Nachricht,
- dem Empfang, in der mindestens einen DHCP-Server-Entität (11, 12), einer Lease-Aufhebungsnachricht von dem mindestens einen Netzknoten (101, 102, 103),
- einem Lease-Aufgabeereignis.

8. Telekommunikationsnetz (100) zum Verbessern der Verfügbarkeit, Skalierbarkeit und/oder Leistung einer DHCP (Dynamic Host Configuration Protocol)-Funktionalität, das eine DHCP-Entität (10) nach Anspruch 7 umfasst.

9. Programm, das einen computerlesbaren Programmcode umfasst, der, wenn er auf einem Computer oder in einer DHCP-Entität (10) oder auf einer DHCP-Server-Entität (11, 12) oder in einem Datenbankknoten (23, 24, 25, 26, 27, 28) oder zum Teil in einer DHCP-Entität (10) und/oder zum Teil in einer DHCP-Server-Entität (11, 12) und/oder zum Teil in einem Datenbankknoten (23, 24, 25, 26, 27, 28) ausgeführt wird, den Computer oder die DHCP-Entität (10) oder die DHCP-Server-Entität (11, 12) oder den Datenbankknoten (23, 24, 25, 26, 27, 28) veranlasst, ein Verfahren nach einem der Ansprüche 1 bis 6 auszuführen.

10. Computerprogrammprodukt zum Realisieren einer DHCP-Funktionalität innerhalb eines Telekommunikationsnetzes (100), wobei das Computerprogrammprodukt das Programm nach Anspruch 9 umfasst.

## Revendications

1. Procédé pour améliorer la disponibilité, l'extensibilité et/ou la performance d'une fonctionnalité DHCP (fonctionnalité de protocole de configuration d'hôte dynamique) fournie par une entité DHCP (10) - comprenant de multiples entités de serveur DHCP coopérantes (11, 12) - au sein d'un réseau de télécommunications (100), lesdites entités de serveur DHCP (11, 12) partageant l'état d'une base de données contenue dans une structure de données distribuées (20) à laquelle les entités de serveur DHCP (11, 12) de l'entité DHCP (10) peuvent accéder, dans lequel la structure de données distribuées (20) est configurée pour stocker des éléments de données afin que l'entité DHCP (10) fournisse la fonctionnalité de serveur DHCP vers des noeuds de réseau (101, 102, 103) au sein du réseau de télécommunications (100), dans lequel la structure de données distribuées (20) est une table de hachage réparti, dans lequel la structure de données distribuées (20) comprend une partie table de baux (21), la partie table de baux (21) comprend un jeu d'éléments de données, les éléments de données de la partie table de baux (21) décrivant l'état complet de tous les baux d'adresses IP (adresses de protocole Internet) vers les noeuds de réseau (101, 102, 103) du réseau de télécommunications (100), dans lequel la partie table de baux (21) est saisie par les adresses MAC (adresses de commande d'accès au support) et/ou le DUID (identifiant unique de DHCP) des noeuds de réseau (101, 102, 103), dans lequel le procédé comprend les étapes suivantes :
- dans une première étape, au moins une entité de serveur DHCP (11, 12) est déclenchée par un événement déclencheur pour accéder à la structure de données distribuées (20),
- dans une deuxième étape, ultérieure à la première étape, l'au moins une entité de serveur DHCP (11, 12) accède à la structure de données distribuées (20) de telle manière qu'un élément de données spécifique de la partie table de baux (21) - qui est attribué au bail d'une adresse IP louée à l'au moins un noeud de réseau (101, 102, 103) - est verrouillé par l'au moins une entité de serveur DHCP (11, 12),
- dans une troisième étape, ultérieure à la deuxième étape, et après que l'élément de données spécifique de la partie table de baux (21) a été généré et/ou mis à jour et/ou sinon modifié, le verrou de l'élément de données spécifique est libéré par l'au moins une entité de serveur DHCP (11, 12),
dans lequel l'événement déclencheur déclenchant l'accès par l'au moins une entité de serveur DHCP (11, 12) à la structure de données distribuées (20) correspond à au moins un élément parmi les suivants :
- un événement d'expiration de bail, notamment dû à l'expiration d'une minuterie de bail,
- la réception, au niveau de l'au moins une entité de serveur DHCP (11, 12), d'un message de demande de la part de l'au moins un noeud de réseau (101, 102, 103), le message de demande concernant notamment une demande d'acquisition de bail et/ou une demande de renouvellement de bail, notamment au moyen d'un message DHCPREQUEST et/ou un message DHCPDISCOVER,
- la réception, au niveau de l'au moins une entité de serveur DHCP (11, 12), d'un message de libération de bail de la part de l'au moins un noeud de réseau (101, 102, 103),
- un événement d'abandon de bail.

2. Procédé selon la revendication 1, dans lequel la structure de données distribuées (20) comprend, outre la partie table de baux (21), une partie table de groupe IP (22), dans lequel la partie table de groupe IP (22) comprend un jeu supplémentaire d'éléments de données, les éléments de données de la partie table de groupe IP (22) comprenant toutes les adresses IP qui ont été données en tant que baux vers les noeuds de réseau (101, 102, 103) du réseau de télécommunications (100), dans lequel la partie table de groupe IP (22) est saisie par les adresses IP des baux d'adresses IP données aux noeuds de réseau (101, 102, 103).

3. Procédé selon l'une des revendications précédentes, dans lequel les éléments de données de la partie table de groupe IP (22) comprennent, respectivement, les adresses MAC et/ou le DUID (identifiant unique de DHCP) du noeud de réseau (101, 102, 103) respectif,
dans lequel notamment la partie table de groupe IP (22) est remplie uniquement au moment où un bail est donné à l'un des noeuds de réseau (101, 102, 103).

4. Procédé selon l'une des revendications précédentes, dans lequel les éléments de données de la partie table de baux (21) comprennent, respectivement, toutes les informations décrivant le bail, incluant au moins :
- l'adresse IP de bail,
- le temps de concession du bail,
- le temps d'expiration du bail,
- l'état exécutoire du bail,
dans lequel les éléments de données de la partie table de baux (21) comprennent notamment, respectivement, des informations additionnelles spécifiques à la mise en oeuvre du bail, comprenant au moins un élément parmi les suivants :
- l'état de bail suivant lors d'une expiration de temps,
- la classe de facturation du bail,
- des informations issues d'une configuration de serveur.

5. Procédé selon l'une des revendications précédentes, dans lequel les éléments de données de la partie table de baux (21) comprennent, respectivement, une structure de verrou, dans lequel dans le cas où un élément de données de la partie table de baux (21) est verrouillé par l'une quelconque des entités de serveur DHCP (11, 12), la structure de verrou comprend une information d'entité de coffre et une information de version de verrou, l'information d'entité de coffre étant relative à l'entité de serveur DHCP de verrouillage (11, 12), et l'information de version de verrou correspondant à une valeur qui est modifiée, notamment incrémentée ou décrémentée, lors de la libération du verrou.

6. Procédé selon l'une des revendications précédentes, dans lequel, dans une quatrième étape, ultérieure à la deuxième étape et dans le cas où - concernant l'élément de données spécifique de la partie table de baux (21) - l'entité de serveur DHCP correspondante (11, 12), ayant verrouillé cet élément de données spécifique, est dans un état de défaillance avant libération du verrou de l'élément de données spécifique, le verrou est repris jusqu'à une entité de serveur DHCP supplémentaire (11, 12) dans le cas où un temps suffisant s'est écoulé en comparaison à un intervalle de temps prédéterminé.

7. Entité DHCP (10) pour améliorer la disponibilité, l'extensibilité et/ou la performance d'une fonctionnalité DHCP (fonctionnalité de protocole de configuration d'hôte dynamique) fournie par une entité DHCP (10) - comprenant de multiples entités de serveur DHCP coopérantes (11, 12) - au sein d'un réseau de télécommunications (100), lesdites entités de serveur DHCP (11, 12) partageant l'état d'une base de données contenue dans une structure de données distribuées (20) à laquelle les entités de serveur DHCP (11, 12) de l'entité DHCP (10) peuvent accéder, dans laquelle la structure de données distribuées (20) est configurée pour stocker des éléments de données afin que l'entité DHCP (10) fournisse la fonctionnalité de serveur DHCP vers des noeuds de réseau (101, 102, 103) au sein du réseau de télécommunications (100), dans lequel la structure de données distribuées (20) est une table de hachage répartie, dans laquelle la structure de données distribuées (20) comprend une partie table de baux (21), la partie table de baux (21) comprend un jeu d'éléments de données, les éléments de données de la partie table de baux (21) décrivant l'état complet de tous les baux d'adresses IP (adresses de protocole Internet) vers les noeuds de réseau (101, 102, 103) du réseau de télécommunications (100), dans laquelle la partie table de baux (21) est saisie par les adresses MAC (adresses de commande d'accès au support) et/ou le DUID (identifiant unique de DHCP) des noeuds de réseau (101, 102, 103), dans laquelle l'entité DHCP (10) est configurée de telle sorte que :
- au moins une entité de serveur DHCP (11, 12) est déclenchée par un événement déclencheur pour accéder à la structure de données distribuées (20),
- l'au moins une entité de serveur DHCP (11, 12) accède à la structure de données distribuées (20) de telle manière qu'un élément de données spécifique de la partie table de baux (21) - qui est attribué au bail d'une adresse IP louée à l'au moins un noeud de réseau (101, 102, 103) - est verrouillé par l'au moins une entité de serveur DHCP (11, 12),
- après que l'élément de données spécifique de la partie table de baux (21) a été généré et/ou mis à jour et/ou sinon modifié, le verrou de l'élément de données spécifique est libéré par l'au moins une entité de serveur DHCP (11, 12),
dans laquelle l'événement déclencheur déclenchant l'accès par l'au moins une entité de serveur DHCP (11, 12) à la structure de données distribuées (20) correspond à au moins un élément parmi les suivants :
- un événement d'expiration de bail, notamment dû à l'expiration d'une minuterie de bail,
- la réception, au niveau de l'au moins une entité de serveur DHCP (11, 12), d'un message de demande de la part de l'au moins un noeud de réseau (101, 102, 103), le message de demande concernant notamment une demande d'acquisition de bail et/ou une demande de renouvellement de bail, notamment au moyen d'un message DHCPREQUEST et/ou un message DHCPDISCOVER,
- la réception, au niveau de l'au moins une entité de serveur DHCP (11, 12), d'un message de libération de bail de la part de l'au moins un noeud de réseau (101, 102, 103),
- un événement d'abandon de bail.

8. Réseau de télécommunications (100) pour améliorer la disponibilité, l'extensibilité et/ou la performance d'une fonctionnalité DHCP (fonctionnalité de protocole de configuration d'hôte dynamique) comprenant une entité DHCP (10) selon la revendication 7.

9. Programme comprenant un code de programme lisible par ordinateur qui, lorsqu'il est exécuté sur un ordinateur ou sur une entité DHCP (10) ou sur une entité de serveur DHCP (11, 12) ou sur un noeud de base de données (23, 24, 25, 26, 27, 28) ou en partie sur une entité DHCP (10) et/ou en partie sur une entité de serveur DHCP (11, 12) et/ou en partie sur un noeud de base de données (23, 24, 25, 26, 27, 28) amène l'ordinateur ou l'entité DHCP (10) ou l'entité de serveur DHCP (11, 12) ou le noeud de base de données (23, 24, 25, 26, 27, 28) à réaliser un procédé selon l'une des revendications 1 à 6.

10. Produit programme d'ordinateur pour réaliser une fonctionnalité DHCP au sein d'un réseau de télécommunications (100), le produit programme d'ordinateur comprenant le programme selon la revendication 9.
